# EUROPÄISCHE PATENTSCHRIFT

(11) **EP 0 690 226 B1**
(45) Veröffentlichungstag und Bekanntmachung des Hinweises auf die Patenterteilung: **24.09.1997**
(21) Anmeldenummer: 95109274.1
(22) Anmeldetag: 14.06.1995
(51) Int. Cl.: F02P 17/00, G01D 7/00

(54) **Vorrichtung mit einem Bildschirm zur Anzeige eines Steuerfeldes für die Steuerung eines den Lauf eines Verbrennungsmotors überwachenden Messgeräts**
Device with a screen for displaying a control panel for controlling a combustion engine analyzer
Dispositif avec un écran pour visualiser un panneau de contrôle pour contrôler un appareil d'analyse pour un moteur à combustion

(30) Priorität: 27.06.1994 DE 9410344 U
(43) Veröffentlichungstag der Anmeldung: 03.01.1996
(73) Patentinhaber: SIEMENS AKTIENGESELLSCHAFT, 80333 München (DE)
(72) Erfinder: Messbacher, Gerd, D-90587 Tuchenbach (DE); Rudolph, Roland, D-90765 Fürth (DE)

(56) Entgegenhaltungen:
- EP-A- 0 477 507
- DE-A- 4 243 543
- Produktbeschreibung SITEST 462

## Beschreibung

Aus der EP 0 477 507 A2 ist ein digitales Motorprüfgerät bekannt. Zur Durchführung der Prüfungen können Anzeigen auf einem Bildschirm über spezielle Funktionstasten oder über eine separate Tastatur aktiviert werden.

Bei der Entwicklung und beim Service von modernen Verbrennungsmotoren, insbesondere im Kraftfahrzeugbereich, sind in heutiger Zeit deren Treibstoffverbrauch und die Emissionen von Schadstoffen besonders zu beachten. Um auf diese Eigenschaften eines Verbrennungsmotors insbesondere konstruktiv und bei dessen Instandhaltung Einfluß nehmen zu können ist es notwendig, den Lauf eines Verbrennungsmotors, d.h. insbesondere den sich in jedem Zylinder ereignenden Verbrennungsvorgang, meßtechnisch genau zu erfassen. Hierzu sind Prüfstandsgeräte im Einsatz, welche auch kurz als sogenannte "zündungstester" bezeichnet werden können. Mit derartigen Geräten sind eine Vielzahl von für Verbrennungsmotoren spezifische Meßwerte erfaßbar. Bei Ottomotoren sind dies z.B. die Drehzahl, Drehzahlschwankungen, der Schließwinkel, die Zündwinkel der einzelnen Zylinder u.dgl.. Bei Dieselmotoren können zusätzlich erfaßt werden z.B. der Einspritzbeginn, die Einspritzdauer u.dgl.. Ein Gerät dieser Art wurde z.B. von der Firma Siemens unter der Typenbezeichnung SITEST 462 entwickelt.

Bei derartigen Meßgeräten besteht ein besonderes Problem darin, daß die Bedienung selbst für Fachpersonal kompliziert ist. So sind eine grundlegende Einweisung und ein intensives Training für eine fehlerfreie Bedienung der Geräte notwendig. Die Ursache dieser Probleme wird in den für die Bedienung der Geräte vorhandenen Elementen gesehen. So erfolgt die Steuerung der Geräte, d.h. die Aktivierung unterschiedlicher Betriebsarten, in der Regel über herkömmliche Taster. Zur Anzeige von Meß- und Vorgabewerten sind herkömmliche Digitalanzeigevorrichtungen vorgesehen. Die in einer möglichst geringen Anzahl vorhandenen Taster und Digitalwertanzeigen sind verteilt in einer Frontplatte des Gerätes eingelassen.

Aufgrund dieser Gestaltung der Steuer- und Anzeigeelemente auf einer Frontplatte eines Prüfstandsgerätes sind zur Aktivierung von Funktionen häufig komplexe Bedienhandlungen notwendig, in die meist mehrere Taster und Digitalanzeigevorrichtungen u.U. auch mehrfach hintereinander einbezogen werden müssen.

Ferner ist es wegen der beschränkten Fläche auf einer derartigen Gerätefrontplatte nicht möglich, für jede Funktion des Gerätes eigene Taster und Digitalwertanzeigen vorzusehen. Vielmehr sind funktionelle Mehrfachbelegungen von Tastern und die Verwendung von einer Digitalanzeigevorrichtung für unterschiedliche Eingabe- und Meßwerte notwendig. Hierdurch wird eine Bedienung erschwert, da ein Bediener z.B. vor dem Ablesen einer Digitalanzeigevorrichtung Kenntnis von dem aktuellen logischen Bedeutungsinhalt des jeweils angezeigten Wertes haben muß, d.h. ob ein Wert z.B. als Drehzahlistwert oder Drehzahlschwankung aufzufassen ist.

Insbesondere ist die Parametrierung derartiger Geräte in aller Regel unübersichtlich, d.h. die Anpassung des Gerätes an ein die besonderen Eigenschaften eines aktuell auszumessenden Verbrennungsmotors. Die zur Parametrierung, d.h. Justierung und Eichung derartiger Geräte notwendigen Abfolgen von Tastenbetätigungen und Anzeigebetrachtungen sind vielfach kompliziert. Die Ursache hierfür wird darin gesehen, daß aufgrund der mengenmäßigen Beschränkung von Tastern und anzeigevorrichtungen auf einer Frontplatte eines Prüfstandsgerätes einfache Tasten- und Anzeigekombinationen im laufenden Betrieb häufiger vorkommenden Betriebszuständen des Gerätes vorbehalten bleiben müssen. Für die weniger häufig vorkommenden Betriebszustände des Gerätes verbleiben dann nur noch die komplexeren Tasten- und Anzeigekombinationen, welche somit häufig den für die Parametrierung notwendigen Bedienhandlungen zugewiesen werden. Diese bereiten dann im doppelten Sinne Schwierigkeiten, da sie zum einen nicht sehr häufig vorgenommen werden, und diesen zum anderen komplexere Tasten- und Anzeigekombinationen zugeordnet sind.

Der Erfindung liegt somit die Aufgabe zugrunde, ein Vorrichtung zur Parametrierung eines den Lauf eines Verbrennungsmotors überwachenden Meßgerätes anzugeben, bei der die oben dargestellten Schwierigkeiten bei der Bedienung nicht auftreten.

Die Aufgabe wird gelöst mit der im Anspruch 1 angegebenen Vorrichtung. Vorteilhafte weitere Ausführungsformen derselben sind in den nachfolgenden Unteransprüchen angegeben.

Die Erfindung und vorteilhafte Ausführungsformen derselben werden anhand der nachfolgend kurz dargestellten Figuren naher erläutert. Dabei zeigt
- FIG 1: das erfindungsgemäße Bildschirmsteuerfeld, wobei über einen ersten Teil weitere, alternative Teile des Bildschirmsteuerfeldes zusätzlich aktivierbar sind,
- FIG 2: einen zusätzlich zum ersten Teil des erfindungsgemäßen Bildschirmsteuerfeldes aktivierbaren zweiten Teil, womit ein oder mehrere zur Ausgabe der Meßwerte für die Überwachung eines Verbrennungsmotors dienende Diagramme parametrier- und aktivierbar sind, und
- FIG 3: eine beispielhafte vorkonfektionierte Zusammenstellung von Meßwert-Zeitverläufen einer aus vier Kanälen bestehenden Anzeigekanal-Meßwertkanal-Zuordnung.

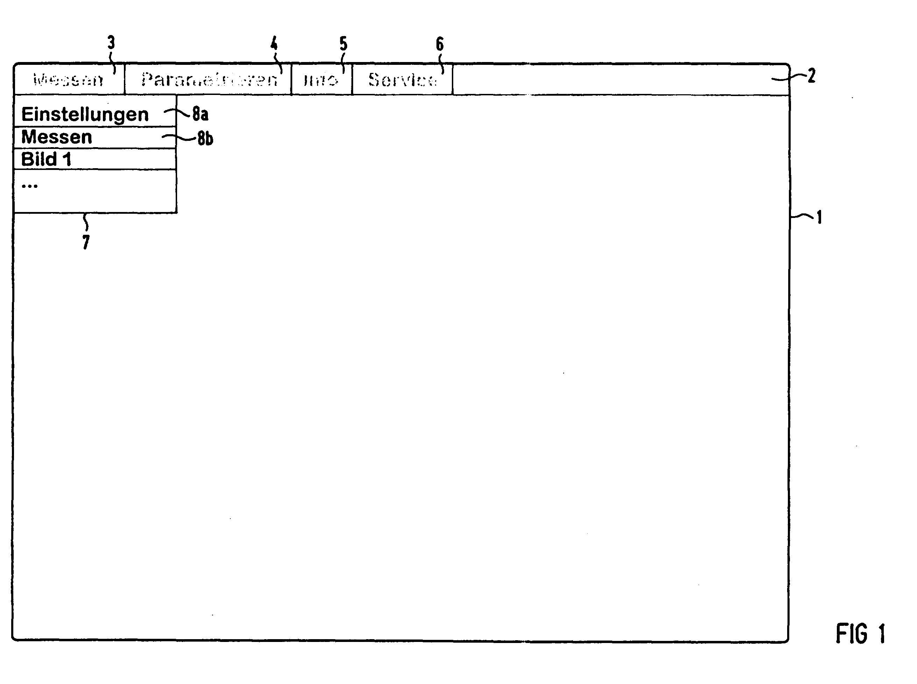

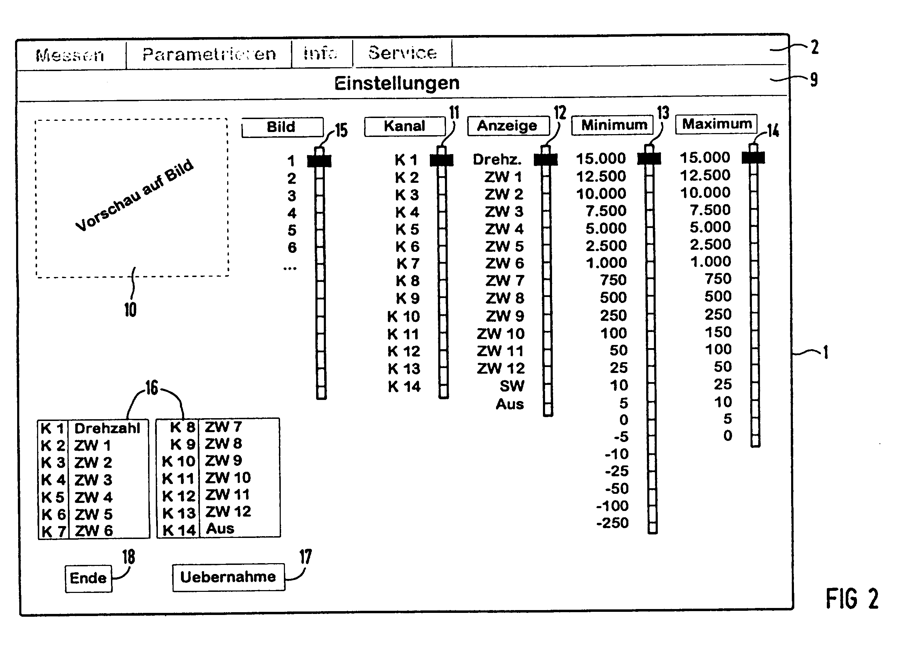

In FIG 1 ist ein Beispiel für das erfindungsgemäße Bildschirmsteuerfeld 1 dargestellt. Dieses besteht im wesentlichen aus zwei Teilen. Der erste Teil ist bevorzugt im Kopfbereich des Feldes angeordnet und wird desweiteren als schaltflächenleiste 2 bezeichnet. Diese enthält in der Regel mehrere Schaltflachen, womit zusätzlich alternative Teile des Bildschirmsteuerfeldes aktivierbar sind. Diese nehmen dann den eigentlichen, flächenmäßig größten Hauptbereich des Bildschirmsteuerfeldes 1 ein, welcher im Beispiel der FIG 2 terhalb der Hauptschaltflächenleiste liegt. Die Hauptschaltflächenleiste 2 stellt somit einen mit einem Inhaltsverzeichnis vergleichbaren ersten Teil des erfindungsgemäßen Steuerfeldes 1 dar. Dieser bildet quasi eine steuerungstechnische Verzweigungsebene, worüber durch Bedienung der dort zusammengestellten Schaltflächen eine Auswahl und Aktivierung von weiteren Teilen des Bildschirmsteuerfeldes möglich ist. Die Hauptschaltflächenleiste 2 kann auch an anderen Stellen des Bildschirmsteuerfeldes 1 angeordnet sein, z.B. am unteren oder einem der seitlichen Ränder. Bei Aktivierung von weiteren, alternativen Teilen des Bildschirmsteuerfeldes nehmen diese dann den jeweils darüber oder daneben liegenden, restlichen Teil des Bildschirmsteuerfeldes ein.

Die Hauptschaltflächenleiste 2 der in FIG 1 dargestellten Ausführung des erfindungsgemäßen Bildschirmsteuerfeldes für ein den Lauf eines Verbrennungsmotors überwachendes Meßgerät weist beispielhaft die Schaltflächen "Messen", "Parametrieren", "Info" und "Service" auf. Durch Betätigung eines dieser Schaltflächen z.B. über eine Tastatur, einen sogenannten Leuchtstift bzw. ein herkömmlich als "Maus" bezeichnetes Eingabegerät können zusätzlich zur Hauptschaltflächenleiste weitere alternative Teile des Bildschirmsteuerfeldes aktiviert werden. Diese erscheinen dann in dem in FIG 1 darunter liegenden, freien Hauptbereich des Bildschirmsteuerfeldes.

Bei dem in FIG 1 dargestellten Beispiel wird durch Betätigung einer Schaltfläche der Hauptschaltflächenleiste 2 zunächst jeweils eine dazugehörige, zusätzliche Unterschaltflächenleiste aktiviert, welche eine Vielzahl von bevorzugt tabellarisch angeordneten weiteren Schaltflächen enthält. So wird bei Betätigung der mit "Messen" bezeichneten Schaltfläche 3 eine Unterschaltflächenleiste 7 geöffnet, welche im Beispiel der FIG 1 die weiteren Schaltflächen "Einstellungen", "Messen" und "Bild1", "..." aufweist. Bei Betätigung einer dieser Schaltflächen wird nach Ausblenden der Unterschaltflächenleiste 7 unterhalb der Hauptschaltflächenleiste 2 dann ein zusätzlicher, alternativer Teil des Bildschirmsteuerfeldes zusätzlich aktiviert.

Für die weitere Beschreibung der Erfindung sind nur die mit "Einstellungen" und "Messen" bezeichneten Schaltflächen 8a und 8b der Unterschaltflächenleiste 7 von Bedeutung. Mit Hilfe des nach deren Betätigung aktivierten weiteren Teiles des Bildschirmsteuerfeldes ist es möglich, die Meßwerteanzeige und Ausgabe des den Lauf eines Verbrennungsmotors überwachenden Meßgerätes zu parametrieren und aktivieren. Das Meßgerät wird somit hierüber zur Ermöglichung einer ordnungsgemäßen weiteren Auswertung der Meßergebnisse auf die vom jeweiligen Motortyp und den aktuellen Betriebsbedingungen abhängigen Besonderheiten eines oder mehrerer jeweils zu überwachender Meßwerte eingestellt und anschließend in Betrieb gesetzt.

Hierzu weist das Bildschirmsteuerfeld erfindungsgemäß einen ersten Schiebeschalter auf, womit Anzeigekanäle des Meßgerätes anwählbar sind. Die Anzeigekanäle können als eine Schnittstelle zwischen einer Verarbeitungseinheit und einer Anzeigeeinheit des Meßgerätes angesehen werden. Durch Belegung der Anzeigekanäle können den Elementen einer Anzeigeeinheit des Meßgerätes ausgewählte Meßwerte in einer vorgegebenen Reihenfolge zugeführt werden. Das Bildschirmsteuerfeld weist erfindungsgemäß einen zweiten Schiebeschalter auf, womit Meßwertkanäle des Meßgerätes anwählbar sind. Über die Meßwertkanäle werden insbesondere einer Verarbeitungseinheit des Meßgerätes die vom jeweiligen Verbrennungsmotor abgenommenen Meßwerte bevorzugt in Form von Zeitverläufen zugeführt. Die Meßwertkanäle können als eine Schnittstelle zwischen den Meßgebern und einer Verarbeitungseinheit des Meßgerätes angesehen werden. Gemäß der Erfindung ist schließlich eine Speichervorrichtung vorhanden, womit den jeweiligen Stellungen des ersten und zweiten Schiebeschalters entsprechende, aktuelle Anzeigekanal-Meßwertkanal-Zuordnungen, speicherbar sind. Die insbesondere abhängig von der Art der jeweiligen Meßaufgabe aktuell vorgenommenen Verknüpfung von Meßwertkanälen und Anzeigekanälen können somit zumindest vorübergehend fixiert werden.

Eine derartige Vorrichtung hat den Vorteil, daß eine von der jeweiligen Belegung der Meßwertkanäle des Meßgerätes mit einzelnen Meßwerten bestimmten physikalischen Inhalts unabhängige Zuordnung derselben zu Anzeigekanälen des Meßgerätes vorgenommen werden kann. Es ist somit möglich, anwendungsabhängig und unter Berücksichtigung z.B. einer übersichtlichen Anzeigbar-, Ablesbar-, Vergleichbar- und Weiterverarbeitbarkeit der Meßwertverläufe auf den Meßwertkanälen diese in einer bestimmten Reihenfolge und Auswahl den Anzeigekanälen des Meßgerätes zuzuordnen. Abhängig von den jeweils u.U. recht unterschiedlichen Randbedingungen verschiedener Meßaufgaben können somit bestimmten Anzeigekanälen bestimmte Meßwertkanäle in einer ausgewählten Reihenfolge zugeordnet werden. Insbesondere zum Zwecke einer Verbesserung der Auswertbarkeit von Meßergebnissen ist es mit der Erfindung teilhaft möglich, unterschiedliche Anzeigekanal-MeßwertkanalZuordnungen aus der festen Gruppe von Meßwertkanälen und somit einer festen Gruppe von Meßwerten vorzunehmen. Die Anzeigekanäle können dann in einer oder mehreren, bevorzugt vorkonfektionierten diagrammartigen Zusammenstellungen auf einem als Anzeige- oder Ausgabeeinheit dienenden weiteren Teil des erfindungsgemäßen Bildschirmsteuerfeldes zur Darstellung gebracht werden.

Bei dem in FIG 2 dargestellten Beispiel für ein gemäß der Erfindung aufgebautes Bildschirmsteuerfeld 1 weist das dazugehörige Meßgerät beispielhaft vierzehn Anzeigekanäle K1...K14 auf, welche über einen ersten, mit "Kanal" bezeichneten Schiebeschalter 11 anwählbar sind. Das Meßgerät weist ferner beispielhaft die mit Drehz.,ZW1...ZW12,SW bezeichneten vierzehn Meßwertkanäle auf. Diese sind über einen zweiten, mit "Anzeige" bezeichneten zweiten Schiebeschalter 12 anwählbar. Jeder Meßwertkanal stellt einen vom jeweiligen Verbrennungsmotor abgenommenen Meßwert bereit. So stellt der wertkanal "Drehz." den Istwert der Motordrehzahl zur Verfügung. Ferner können mit Hilfe der mit "ZW1"..."ZW12" bezeichneten Meßwertkanäle die Istwerte der Zylinder-Zündwinkel für Verbrennungsmotoren bereitgestellt werden, welche bis zu zwölf Zylindern aufweisen. Über den mit "SW" bezeichneten Meßwertkanal kann schließlich der Istwert eines sogenannten Motor-Schließwinkels bereitgestellt werden. Die letzte, mit "AUS" bezeichnete Stellung des zweiten Schiebeschalters 12 dient im Beispiel der FIG 2 lediglich zur Abschaltung der Meßwertkanäle und damit zur Deaktivierung der Meßwerterfassung des Meßgerätes.

Erfindungsgemäß ist nun mittels einer Speichervorrichtung eine jede der den jeweiligen Stellungen des ersten und zweiten Schiebeschalters 11,12 entsprechende Anzeigekanal-Meßwertkanal-Zuordnung speicherbar. Im Beispiel der FIG 2 wird diese Speichervorrichtung durch Betätigung einer mit "Übernahme" bezeichneten Schaltfläche 17 aktiviert.

Werden durch entsprechende Betätigung des ersten Schiebeschalters 11 ("Kanal") z.B. der Anzeigekanal "K1" und des zweiten Schiebeschalters 12 ("Anzeige") z.B. der Meßwertkanal "SW" aktiviert, so kann diese Zuordnung durch Betätigung der Schaltfläche "Übernahme" 17 gespeichert werden. Des weiteren kann nach Anwahl z.B. des Anzeigekanales "K2" diesem z.B. der Meßwertkanal "Drehz." zugeordnet werden. Schließlich können z.B. den Anzeigekanälen K3,K4,K5,K6 die Meßwertkanäle ZW1,ZW2,ZW3,ZW4 zugeordnet werden. Handelt es sich bei dem zu überwachenden Verbrennungsmotor beispielhaft um einen Vierzylindermotor, so sind diese Anzeigekanal-Meßwertkanal-Zuordnungen für eine ordnungsgemäße Meßwertanzeige ausreichend. In diesem Fall sind die Meßwertkanäle ZW5...ZW12 unbelegt, und es ist nicht notwendig, den weiteren Anzeigekanälen K7...K14 Meßwertkanäle zuzuordnen.

Andererseits ist es aber für einen Benutzer dennoch möglich, weitere Anzeigekanäle K7 ... K14 mit aktiven Meßwertkanälen zu belegen, welche bereits auf einen der Anzeigekanäle K1 ... K6 gelegt sind, und diese weiteren Anzeigekanal-Meßwertkanal-Zuordnungen zu speichern. Die Erfindung weist den großen Vorteil auf, daß eine beliebige Zuordnung von Meßwertkanälen des zweiten, in FIG 2 mit "Anzeige" bezeichneten Schiebeschalters 12 zu Anzeigekanälen des in FIG 2 mit "Kanal" bezeichneten ersten Schiebeschalters 11 möglich ist. Es können beliebige Kombinationen von Meßwert- und Anzeigekanälen gebildet und abgespeichert werden. Damit wird insbesondere eine optimale Auswertung der den Anzeigekanälen zugewiesenen Meßwerte des Verbrennungsmotors insbesondere mit Hilfe von vorkonfektionierten, diagrammartigen Zusammenstellungen möglich.

Gemäß einer weiteren, vorteilhaften Ausführungsform der Erfindung springt bei Betätigung des ersten Schiebeschalters 11 der zweite Schiebeschalter 12 auf die der jeweils gespeicherten Anzeigekanal-Meßwertkanal-Zuordnung entsprechenden Stellung. Wird somit entsprechend dem obigen Beispiel der Anzeigekanal "K4" durch entsprechende Betätigung des ersten Schiebeschalters 11 angewählt, so springt im Bildschirmbedienfeld 1 der zweite Schiebeschalter 12 auf den zugeordneten Meßwertkanal ZW2. Vorteilhaft ist es ferner, wenn bei einer Betätigung des zweiten Schiebeschalters 12 der erste Schiebeschalter 11 ebenfalls auf die der jeweils gespeicherten Anzeigekanal-Meßwertkanal-Zuordnung entsprechende Stellung springt. Beide Schiebeschalter 11 und 12 können somit gemäß den jeweils gespeicherten Anzeigekanal-Meßwertkanal-Zuordnungen "synchronisiert" werden.

Die Betätigung der im Beispiel der FIG 2 durch einen dicken horizontalen Balken symbolisierten Betätigungselemente der Schiebeschalter 11,12,13,14,15 erfolgt bevorzugt in einer für die Bildschirmbedientechnik üblichen Weise. Die Anwahl eines der Anzeigekanäle K1...K14 des ersten Schiebeschalters 11 bzw. eines der Meßwertkanäle des zweiten Schiebeschalter 12 kann z.B. über eine Tastatur, ein herkömmlich als "Maus" bezeichnetes Eingabegerät bzw. durch Direktanwahl mit Hilfe eines sogenannten Leuchtstiftes bzw. Bildschirmgriffels erfolgen.

Es ist vorteilhaft wenn das erfindungsgemäße Bildschirmsteuerfeld 1 zusätzlich über ein erstes Anzeigefeld zur Darstellung der gespeicherten Anzeigekanal-Meßwertkanal-Zuordnungen verfügt. Im Beispiel der FIG 2 ist ein derartiges ersten Anzeigefeld 16 im linken unteren Bereich des Bildschirmsteuerfeldes dargestellt. Dort sind in einer zweispaltigen, tabellarischen Darstellung die den Anzeigekanälen K1...K14 jeweils zugeordneten Meßwertkanäle Drehz.,ZW1...ZW12,SW dargestellt. Dabei zeigt der linke bzw. rechte Teil des ersten Anzeigefeldes 16 die Zuordnungen für die Anzeigekanäle K1... K7 bzw. K8...K14. In dem in FIG 2 dargestellten Beispiel sind den Anzeigekanälen K1...K14 des ersten Schiebeschalters 11 die Meßwertkanäle in der gleichen, durch die Belegung des zweiten Schiebeschalters 12 vorgegebenen Reihenfolge direkt zugeordnet. Eine derartige "Standardzuordnung" kann vom Bediener jederzeit in der oben geschilderten Weise an die Besonderheiten einer speziellen Meßaufgabe angepaßt werden. Die in FIG 2 dargestellte Zuordnung eignet sich somit als eine Art "Voreinstellung", von der ein Bediener abhängig von der jeweiligen Komplexität einer Meßwertauswertung und der hierdurch erforderlichen Gegenüberstellung von Meßwerten verschiedener Meßwertkanäle beliebig abweichen kann.

Bei einer weiteren, im Beispiel der FIG 2 bereits dargestellten Ausführungsform der Erfindung sind zusätzlich ein dritter und vierter Schiebeschalter 13,14 vorhanden. Hiermit kann dem durch die aktuelle Stellung des zweiten Schiebeschalters 12 angewählten Meßwertkanal bzw. dem durch die aktuelle Stellung des ersten Schiebeschalters 11 angewählten Anzeigekanal jeweils ein Minimal- oder Maximalwert aus einer Reihe von Vorgabewerten zugeordnet werden. So stellt in FIG 2 der dritte Schiebeschalter 13 beispielhaft eine Vielzahl von zwischen den Grenzwerten -250 und 15.000 liegenden Vorgabewerten für einen Minimalwert zur Verfügung. Dementsprechend stellt der vierte Schiebeschalter 15 eine Vielzahl von zwischen den Grenzen 0 und 15.000 liegenden Vorgabewerten für einen Maximalwert zur Verfügung. Die Zuordnung von ausgewählten Minimal-und Maximalwerten zu Anzeigekanal-Meßwertkanal-Zuordnungen erfolgt wiederum bevorzugt durch Betätigung der mit "Übernahme" bezeichneten Schaltfläche 17.

Bei einer weiteren vorteilhaften Ausführungsform der Erfindung ist zusätzlich ein fünfter, im Beispiel der FIG 2 mit "Bild" bezeichneter Schiebeschalter 15 vorhanden. Hiermit können vorkonfektionierte, diagrammartige Zusammenstellungen von angewählten Anzeigekanal-Meßwertkanal-Zuordnungen aktiviert werden. Im Beispiel der FIG 2 sind sechs derartige sammenstellungen 1...6 aktivierbar. Diese stellen gemäß der jeweils vorgenommenen Anzeigekanal-Meßwertkanal-Zuordnung sortierte Diagramme der zu den einzelnen Meßwertkanälen gehörenden Meßwerte des Verbrennungsmotors insbesondere in Form von Zeitverläufen zur Verfügung.

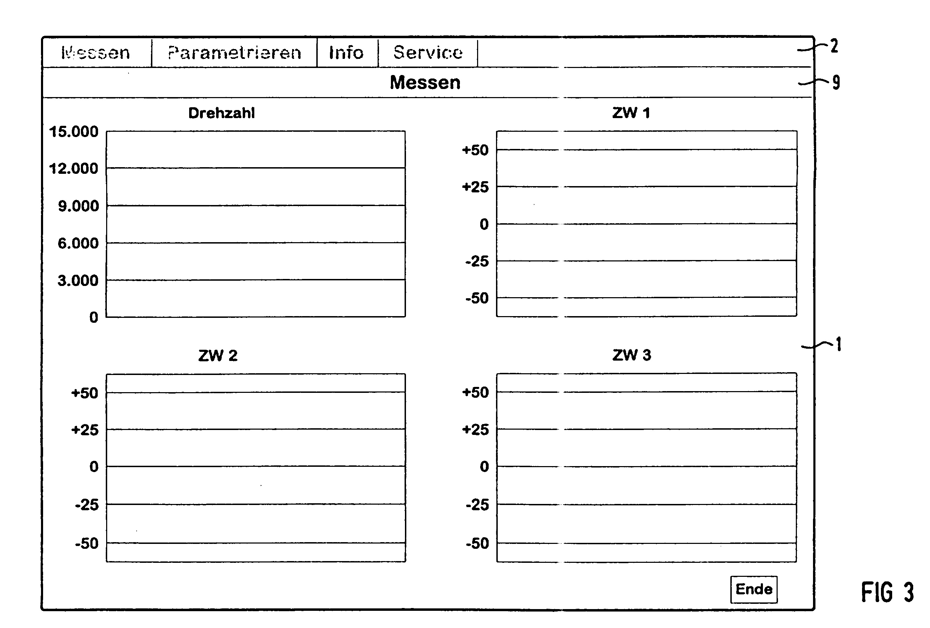

In FIG 3 ist beispielhaft eine derartige vorkonfektionierte diagrammartige Zusammenstellung von zu einer AnzeigekanalMeßwertkanal-Zuordnung gehörigen Meßwert-Zeitverläufen dargestellt. Dabei zeigt der in einer Informationszeile 9 mit "Messen" bezeichnete Teil des Bildschirmsteuerfeldes die vier Anzeigekanäle K1...K4, denen gemaß dem in FIG 2 dargestellten Beispiel die Meßwertkanäle "Drehz.", "ZW1", "ZW2", "ZW3" zugeordnet sind. Über die Zusammenstellung der vorkonfektionierten Diagramme gemäß FIG 3 können die zeitlichen Verläufe der den ersten vier Meßwertkanälen des zweiten Schiebeschalters 12 zugeordneten Meßwerte Motordrehzahl und Zylinderzündwinkel 1 bis 3 angezeigt werden. Die Parametrierung der y-Achse eines jeden Anzeigekanal-Diagrammes erfolgt in der oben beschriebenen Weise durch die Zuordnung jeweils eines Minimal- und Maximalwertes. So wird der Maximalwert 15.000 z.B. in dem zum Anzeigekanal K1 gehörigen Diagramm für den Meßwert "Drehzahl" durch die oberste Stellung des vierten Schiebeschalters 14, und der Minimalwert 0 durch die entsprechende, im unteren Drittel des dritten Schiebeschalters 13 befindliche Stellung vorgegeben.

Vorteilhaft weist das erfindungsgemäße Bildschirmsteuerfeld ein zweites Anzeigefeld auf, in dem die entsprechend der aktuellen Stellung des fünften Schiebeschalters aktivierte diagrammartige Zusammenstellung für die entsprechende Anzeigekanal-Meßwertkanal-Zuordnung in einem verkleinerten Maßstab darstellbar ist. Im Beispiel der FIG 3 ist ein derartiges, mit "Vorschau auf Bild" bezeichnetes zweites Anzeigefeld 10 bereits dargestellt. Vorteilhaft ist dieses horizontal annähernd auf gleiche Höhe neben dem dazugehörigen fünften Schiebeschalter 15 angeordnet. Mittels eines derartigen "PREVIEW"-Anzeigefeldes kann ein Bediener insbesondere die Übersichtlichkeit und Auswertbarkeit einer über den fünften Schiebeschalter 15 ausgewählten diagrammartigen Zusammenstellung der jeweiligen, gespeicherten Anzeigekanal-Meßwertkanal-Zuordnung überprüfen. Falls diese Darstellung bezüglich der aktuell vorliegenden Meßaufgabe unvorteilhaft erscheint, so kann z.B. durch Speicherung einer veränderten Anzeigekanal-Meßwertkanal-Zuordnung eine verbesserte, aussagekräftigere Kombination von Meßwertkanälen zusammengefaßt werden.

Es ist weiterhin vorteilhaft, wenn die Schiebeschalter derart angeordnet sind, daß sich eine annähernd vertikale Schieberichtung ergibt, und die Schiebeschalter horizontal annähernd auf gleicher Höhe nebeneinander liegend angeordnet sind. Eine derartige Ausführung ist im Beispiel der FIG 2 bereits dargestellt. So sind die Schiebeschalter in der Reihenfolge 15,11,12,13,14 mit vertikaler Schieberichtung nebeneinander angeordnet. Durch eine derartige, übersichtliche Gestaltung wird eine Fehler vermeidende Bedienung ermöglicht.

## Patentansprüche

1. Vorrichtung zur Steuerung eines den Lauf eines Verbrennungsmotors überwachenden Meßgeräts, mit einem Bildschirm zur Anzeige eines Bildschirmsteuerfeldes (1), auf dem angezeigt werden
a) ein erster Schiebeschalter (11), womit Anzeigekanäle (K1...K14) des Meßgerätes anwählbar sind,
b) ein zweiter Schiebeschalter (12), womit Meßwertkanäle (Drehz,ZW1...ZW12,SW) des Meßgerätes für die vom jeweiligen Verbrennungsmotor abgenommenen Meßwerte anwählbar sind, und mit
c) einer Speichervorrichtung, womit die den jeweiligen Stellungen des ersten und zweiten Schiebeschalters (11,12) entsprechenden Anzeigekanai-Meßwertkanai-Zuordnungen (16) speicherbar sind.

2. Vorrichtung nach Anspruch 1, wobei bei Betätigung des ersten Schiebeschalters (11) der zweite Schiebeschalter (12) auf die der jeweils gespeicherten Anzeigekanal-Meßwertkanal-Zuordnung entsprechende Stellung springt, und/oder bei Betätigung des zweiten Schiebeschalters (12) der erste Schiebeschalter (11) auf die der jeweils gespeicherten Anzeigekanal-Meßwertkanal-Zuordnung entsprechende Stellung springt.

3. Vorrichtung nach Anspruch 1 oder 2, mit einem ersten Anzeigefeld (16) zur Darstellung der gespeicherten Anzeigekanal-Meßwertkanal-zuordnungen.

4. Vorrichtung nach einem der vorangegangenen Ansprüche, mit einem dritten und/oder vierten Schiebeschalter (13,14), womit dem durch die aktuelle Stellung zumindest des zweiten Schiebeschalters (12) angewählten Meßwertkanal (Drehz,ZW1...ZW12, SW) ein Minimal- und/oder Maximalwert aus einer Reihe von Vorgabewerten zugeordnet werden kann.

5. Vorrichtung nach einem der vorangegangenen Ansprüche, mit einem fünften Schiebeschalter (15), womit vorkonfektionierte diagrammartige Zusammenstellungen von angewählten Anzeigekanal-Meßwertkanal-Zuordnungen aktivierbar sind, insbesondere zur Darstellung von zeitlichen Verläufen der zu den Meßwertkanälen gehörenden Meßwerte (Drehz.,ZW1...ZW12,SW).

6. Vorrichtung nach Anspruch 5, mit einem zweiten Anzeigefeld (10), in dem die entsprechend der aktuellen Stellung des fünften Schiebeschalters (15) aktivierte diagrammartige Zusammenstellung für eine Anzeigekanal-Meßwertkanal-Zuordnung in einem verkleinerten Maßstab ("Preview") darstellbar ist.

7. Vorrichtung nach Anspruch 6, wobei das zweite Anzeigefeld (10) und der fünfte Schiebeschalter (15) horizontal annähernd auf gleicher Höhe nebeneinander liegend angeordnet sind.

8. Vorrichtung nach einem der vorangegangenen Ansprüche, wobei die Schiebeschalter (11,12,13,14,15) derart angeordnet sind, daß sich eine annähernd vertikale Schieberichtung ergibt.

9. Vorrichtung nach Anspruch 8, wobei die Schiebeschalter (11,12,13,14,15) horizontal annähernd auf gleicher Höhe nebeneinander liegend angeordnet sind.

## Claims

1. Device to control a measuring device which monitors the running of an internal combustion engine, having a screen to display a screen control panel (1), on which there is displayed
a) a first slide switch (11), with which display channels (K1...K14) of the measuring device can be selected,
b) a second slide switch (12), with which measured-value channels (speed, ZW1...ZW12,SW) of the measuring device can be selected for the measured values taken from the respective internal combustion engine, and having
c) a memory device, with which the display channel and measured-value channel allocations (16) corresponding to the respective positions of the first and second slide switch (11, 12) can be stored.

2. Device according to claim 1, whereby upon operation of the first slide switch (11) the second slide switch (12) jumps on to the position corresponding to the respectively stored display channel and measured-value channel allocation, and/or upon operation of the second slide switch (12) the first slide switch (11) jumps on to the position corresponding to the respectively stored display channel and measured-value channel allocation.

3. Device according to claim 1 or 2, having a first display panel (16) to show the stored display channel and measured-value channel allocations.

4. Device according to one of the preceding claims, having a third and/or fourth slide switch (13, 14), with which a minimum and/or maximum value from a series of desired values can be allocated to the measured-value channel (speed, ZW1...ZW12,SW) selected by the current position of at least the second slide switch (12).

5. Device according to one of the preceding claims, having a fifth slide switch (15), with which standard diagram-like compilations of selected display channel and measured-value channel allocations can be activated, in particular to show time characteristics of the measured values (speed, ZW1...ZW12,SW) belonging to the measured-value channels.

6. Device according to claim 5, having a second display panel (10) in which the diagram-like compilation for a display channel and measured-value channel allocation, which compilation is activated according to the current position of the fifth slide switch (15), can be shown on a reduced scale ("preview").

7. Device according to claim 6, whereby the second display panel (10) and the fifth slide switch (15) are arranged horizontally such that they lie next to each other approximately at the same level.

8. Device according to one of the preceding claims, whereby the slide switches (11, 12, 13, 14, 15) are arranged in such a way that an approximately vertical sliding direction is produced.

9. Device according to claim 8, whereby the slide switches (11, 12, 13, 14, 15) are arranged horizontally such that they lie next to each other approximately at the same level.

## Revendications

1. Dispositif de commande d'un appareil de mesure contrôlant la marche d'un moteur à combustion, comportant un écran d'affichage d'un champ (1) de commande d'écran, sur lequel sont affichés
a) un premier curseur (11), par lequel des canaux d'affichage (K1 à K14) de l'appareil de mesure peuvent être choisis,
b) un deuxième curseur (12), par lequel des canaux de valeurs de mesure (vitesse de rotation, ZW1 à ZW12,SW) de l'appareil de mesure pour les valeurs de mesure prelevées du moteur à combustion considéré peuvent être choisis, et
c) un dispositif de mémorisation, par lequel les associations (16) canal d'affichage - canal de valeurs de mesure correspondant aux positions respectives du premier et du second curseur (11,12) peuvent être mémorisées.

2. Dispositif suivant la revendication 1, dans lequel le second curseur (12) saute à la position correspondant à l'association mémorisée canal d'affichage - canal de valeurs de mesure lors de l'actionnement du premier curseur (11) et/ou le premier curseur (11) saute à la position correspondant à l'association mémorisée canal d'affichage - canal de valeurs de mesure lors de l'actionnement du second curseur (12).

3. Dispositif suivant la revendication 1 ou 2, comportant un premier champ (16) d'affichage pour la représentation des associations mémorisées canal d'affichage - canal de valeurs de mesure.

4. Dispositif suivant l'une des revendications précédentes, comportant un troisième et/ou un quatrième curseur (13,14), par lesquels une valeur minimale et/ou une valeur maximale d'une série de valeurs prescrites peut être associée au canal de valeurs de mesure (vitesse de rotation, ZW1 à ZW12, SW) choisi par la position actuelle au moins du deuxième curseur (12).

5. Dispositif suivant l'une des revendications précédentes, comportant un cinquième curseur (15), par lequel des groupements en diagramme préconçus d'associations sélectionnées canal d'affichage - canal de valeurs de mesure peuvent être activés, notamment pour la représentation de courbes en fonction du temps des valeurs de mesure (vitesse de rotation, ZW1 à ZW12, SW) associées aux canaux de valeurs de mesure.

6. Dispositif suivant la revendication 5, comportant un deuxième champ (10) d'affichage, dans lequel peut être représenté le groupement en diagramme activé suivant la position actuelle du cinquième curseur (15) pour une association canal d'affichage - canal de valeurs de mesure à une échelle réduite ("Preview").

7. Dispositif suivant la revendication 6, dans lequel le deuxième champ (10) d'affichage et le cinquième curseur (15) sont disposés l'un à côté de l'autre horizontalement approximativement à la même hauteur.

8. Dispositif suivant l'une des revendications précédentes, dans lequel les curseurs (11,12;13,14,15) sont disposés de sorte à obtenir une direction de décalage approximativement verticale.

9. Dispositif suivant la revendication 8, dans lequel les curseurs (11,12,13,14,15) sont disposés les uns à côté des autres horizontalement approximativement à la même hauteur.
